# EUROPEAN PATENT APPLICATION

(11) **EP 3 756 939 A1**
(43) Date of publication of application: **30.12.2020**
(21) Application number: 20179941.8
(22) Date of filing: 15.06.2020
(51) Int. Cl.: B60N 2/015, B60N 2/30

(54) **PASSENGER SEAT FOR VEHICLES**

(30) Priority: 26.06.2019 TR 201909535
(71) Applicant: BRUSA Koltuk ve Ic Trim Teknolojileri, 16159 Nilüfer/Bursa (TR)
(72) Inventor: Tuna, Zafer Teoman, 16159 Nilüfer/Bursa (TR)
(74) Representative: Habermann, Hruschka & Schnabel

(57) **Abstract**

The present invention relates to a passenger seat (1) for vehicles having two spaced-apart seat support structures (2) carrying at least one seating surface (3) with a backrest (4), each seat support structure (2) comprising a plurality of sliding blocks (7) with which the seat support structure (2) is guided in a rail (5) provided in an interior ground (6) of the vehicle passenger compartment, each seat support structure (2) comprising an actuation device (8) cooperating with said sliding blocks (7) so as to simultaneously transfer the sliding blocks (7) between a release position, in which the seat support structure (2) can be freely moved along the rail (5), and a locking position, in which the seat support structure (2) is locked in place due to an engagement of the sliding blocks (7) with the rail (5).

## Description

The present invention relates to a passenger seat for vehicles, in particular for buses, minibuses, trains, airplanes, ships and other public transport vehicles. In particular the invention relates to passenger seats which shall be mounted on rails provided in an interior base ground of the vehicle's passenger compartment.

Passenger seats of public transport vehicles usually mounted by way of such rails in the ground floor use bolts and T-shaped nuts vertically extending from the seat legs or seat support structures, which bolts or T-nuts are received by rails which for this purpose comprise correspondingly shaped profiles in cross-section. Such bolts or T-nuts are screwed to tightly fix them inside the rails and thereby fixedly locate the passenger seat in place as foreseen, commonly with defined distances between rows of passenger seats when seen in the longitudinal direction of the vehicle.

This type of fixation prevents or makes it difficult to quickly reorganize the vehicle's interior design with respect to the arrangement of the passenger seats, i.e. to the distances between passenger seats in a row, according to needs. In order to respond to the needs that may arise in the vehicle, such as providing an opening space for the disabled on short notice, widening and narrowing the seat openings and providing space for standing passengers, disassembly and relocation of existing seats is time-consuming and demands competent personnel for that. In principle, the mounting of the passenger seats inside the vehicles is not aimed for their quick and temporary relocation at all.

Even further, in the state of the art the rails provided in the base floor of the vehicle comprise only one distinct opening area for insertion and removal of the seats in their longitudinal extension. Therefore, according to the method for assembly of passenger seats inside a vehicle, the seats are installed into the rail at this opening area and then moved within the rail to their desired locations provided in the rail. Usually, all seats are fixed and fitted at respective points as provided, thereby keeping an uniform distance between them. When these passenger seats need to be dissembled, they will be removed in that the fixation between T-nuts and rails is opened and the seats are then slid to the same removal opening area and there lifted out of the rails. In this method, all passenger seats must be moved along the rails in order to remove also the rear seats.

If, for instance, temporarily more space is needed especially for disabled persons in wheelchairs, such conventional passenger seats cannot be easily released within the rails and slideably moved to a new position and then again safely fixed there.

From the prior art, several mounting techniques for passenger seats are known. Document TR 2007/00379, entitled "Fastening Device For Commercial Vehicle Seats", relates to a fastening device for mounting the seats into the vehicle chassis, which includes a clamping device to increase the mounting strength and thus safety. On the lower edge of the clamping device there is provided an U-shaped chassis connection conduit and on the upper surface of which there is a mounting hole in the 90° upright position.

Document TR 2009/07632, entitled "Adjustable Seat Clutch For A Passenger Seat" relates to an adjustable seat clutch, especially for a bus seat. A foot plate is provided to allow a simple adjustment and still a precise and safe grip, in which a base rail engages in multiple downwardly extending leading studs and apertures of the base rail through at least one axially attached stud to realize axial tensioning within the slots.

Document TR 2011/01000, entitled "Mounting Apparatus" discloses a mounting apparatus for mounting a chair or seat into a conduit which comprises an interlocking mechanism; the mounting apparatus includes a locking mechanism for entering the conduit and moving along the longitudinal axis of the conduit; the locking mechanism has means for engaging with the engagement mechanism of the conduit. The mounting apparatus further includes a positioning mechanism for finding a position in which the locking device is capable of engaging with the engagement mechanism of the conduit. Mounting apparatus has a first cam for controlling engagement and separation with the engagement mechanism; a second cam for bringing the positioning mechanism into an active position, wherein the positioning mechanism extends into selected areas of the active position, and a shaft for rotating both the first and second cam, wherein the shaft is capable of adjusting the mounting apparatus in at least three states by means of a rotational movement: the positioning mechanism is passive and the locking mechanism is separated, the positioning mechanism is active and the locking mechanism is separated, and the locking mechanism is engaged with the engagement mechanism.

Further, document TR 2013/11225, entitled "Apparatus For Temporarily Attaching A Moving Object To A Retaining Rail", relates to an apparatus for fastening a moving object, in particular a vehicle seat, to a retaining rail comprising longitudinal grooves; the apparatus includes multiple guide bolts protruding downwardly and guided in the retaining rail, as well as a locking bolt axially slidable and a pressure bolt which can be slid axially to engage the retaining rail, spaced apart from the locking bolt. The locking bolt and the clamping bolt can axially be slid by means of a lever mechanism. The characteristic of the invention is that the lever mechanism comprises a lever arm that can be rotated around a pivot point; wherein the lever arm articulates the locking bolt and the clamping bolt, which can be slid in the axial direction via the articulation axes; the articulation axis required for the locking bolt is located in front of the pivot point of the lever arm, and the articulation axis required for the clamping bolt is located behind the pivot point of the lever arm, and thereby the locking bolt and clamping bolt are moved in opposite directions by means of the lever arm.

All of the afore-mentioned mechanisms for the installation of passenger seats in the base of a vehicle are not designed to quickly and practically unlatch a passenger seat and move it to a new desired position. The above-described techniques need specially formed rail profiles in the vehicle base and thus increase the costs considerably. In addition, a large number of separate elements and single components within the mechanisms makes it difficult to assemble and dissemble the passenger seat systems and therefore competent, trained personnel is required for the installation, which installation usually cannot be done by an ordinary driver of the vehicle.

Based on this, it is an objective of the present invention to eliminate the above-mentioned disadvantages of such passenger seat systems and to provide an easy-to-use and easy-to-assemble passenger seat, in particular, for just temporarily providing extra space in a vehicle on short notice, e.g. for wheelchairs.

Such objective is solved by a passenger seat according to claim 1.

Accordingly, the present invention provides a passenger seat for vehicles having two spaced-apart seat support structures carrying at least one seating surface with a backrest, each seat support structure comprising a plurality of sliding blocks with which the seat support structure is guided in a rail provided in an interior base of the vehicle passenger compartment, each seat support structure comprising an actuation device cooperating with said sliding blocks so as to simultaneously transfer the sliding blocks between a release position, in which the seat support structure can be freely moved along the rail, and a locking position, in which the seat support structure is locked in place due to an engagement of the sliding blocks with the rail.

In particular, the sliding blocks shall be configured to be able to be vertically lifted upon defined activation of the actuation device.

In order to safely secure the passenger seat in place when the final position of the passenger seat along the longitudinal extension of the rails has been reached, the seat support structure may comprise a locking element with which the actuation device comes into engagement once the sliding blocks are in locked engagement with the rail. The locking element may be actively operated, e.g. by an actuator, or inactively, in that the engagement between the locking element and the actuation device or parts thereof is realized by the movement of the actuation device itself or its cooperating part.

According to one embodiment of the passenger seat according to the invention, the actuation device may be designed as or comprise at least one lever gear or lever mechanism, which is designed to allow simultaneous activation of the sliding blocks, in particular simultaneous lifting of the sliding blocks inside the rail to accomplish the engagement effect.

Further, the lever gear may be supported against or cooperate with at least one spring element or mechanism, which spring element is arranged and configured to allow or at least support release of the engagement of the sliding blocks within the rail, i.e. their vertical descending, once the locking element releases the actuation device.

According to the invention, the locking element may be configured to be manually activated. For that purpose the seat support structure may comprise an opening for the reception of a separate tool, with which an operator, who therefor not has to be skilled, can unlock the locking element, so that upon action of the spring element, the lever gear can return to its original release position. In other words, due to the construction of the lever gear cooperating with the spring element, the sliding blocks descend or are free to descend in the rails once the operator has releasably activated the locking element from the outside.

In a preferred embodiment of the invention a brace or similar means may be provided which is configured to cooperate with the plurality of sliding blocks and which brace is horizontally movably supported, preferably in a sliding manner, in the seat support structure.

According to the invention, the sliding blocks are supported with respect to the brace such so as to be rotated between a functional position, in which the sliding blocks can be freely guided along and in the rail, and a release position, in which the sliding blocks can be freely removed from, i.e. lifted out of, the rail, due to a horizontal shifting of the brace.

Preferably, the brace is configured to be manually activated from the outside through an opening in the seat support structure. By that it is possible, also by a relatively unskilled operator, to remove the passenger seat on the spot. Using a separate tool, the operator can thus horizontally shift the brace between the above-mentioned positions. Once the sliding blocks are rotated out of engagement of the rails, the operator may simply lift the seat support structure from the rails and thus the entire passenger seat if needed. It is therefore according to the invention not necessary to awkwardly slide all of the single passenger seats to a special removal area, but each passenger seat can be quickly removed and also mounted at the initial locations.

According to a preferred embodiment of the passenger seat according to the invention the actuation device of each seat support structure may be connected by a bar or similar structure extending between the spaced-apart seat support structures. The bar may be configured as a pedal-like structure. By the provision of such bar, the actuation device of each seat support structure, with two seat support structures being spaced apart and carrying at least one seating surface, can be activated from the outside synchronously, wherein the operator not needs to cumbersomely lean forward and manually operate the actuation device underneath the seating surface.

In a further aspect, the invention also provides a vehicle, in particular for mass transport of people, which comprises a passenger seat according to one of the embodiments as described above.

It becomes apparent that the passenger seat according to the invention allows a quick passenger seat change system for public transport vehicles and eliminates the above-mentioned drawbacks of the prior art. Thanks to the rotary connection between the sliding blocks in the seat legs and the rails, the seats can be installed at any desired point along the longitudinal extension of the rails. Thus, no extra removal area is needed. The rotary sliding blocks located in the rail profile can be simply lifted upward or locked inside the rail to prevent the passenger seat from moving by means of the lifting or pushing of a pedal system from the outside, respectively. These sliding blocks can also be easily unlocked from the outside by using an unlock tool cooperating with the locking element.

Both the pedal system cooperating with the actuation device inside the seat support structures, the activation of the locking element from the outside and the activation of the brace from the outside allow that the passenger seat according to the invention can be locked and unlocked quickly for allowing movement along the rails on the one hand and that it can be disassembled and assembled on the spot in a short time on the other. For both procedures, there is no need for competent staff, literally anybody can do this easily.

Further advantages and features shall become apparent from the following description of the embodiment as shown in connection with the accompanied drawings, in which
Fig. 1 and 2 schematically show different positions of passenger seats guided and mounted in rails;
Fig. 3 shows a perspective view from behind with passenger seats being removed from the rails;
Fig. 4 shows a view from underneath of a seat support structure;
Fig. 5a shows a bottom view of the base of a seat support structure with sliding blocks in the released state, while Fig. 5b schematically shows the corresponding front view;
Fig. 6a shows a bottom view of the base of the seat support structure with the sliding blocks in the mounted state; while Fig. 6b schematically shows the corresponding front view;
Fig. 7 shows a seat support structure without cover illustrating an actuation device and locking element according to the invention in the release condition;
Fig. 8 shows said seat support structure in a perspective view;
Fig. 9 shows the seat support structure without cover illustrating the actuation device and the locking element according to the invention in the locking condition;
Fig. 10 shows said seat support structure in a perspective view;
Fig. 11 is a perspective view of the housing of the seat support structure;
Fig. 12 is a perspective view of a passenger seat arrangement in the release position; and
Fig. 13 is a perspective view of said passenger seat arrangement in the locked position.

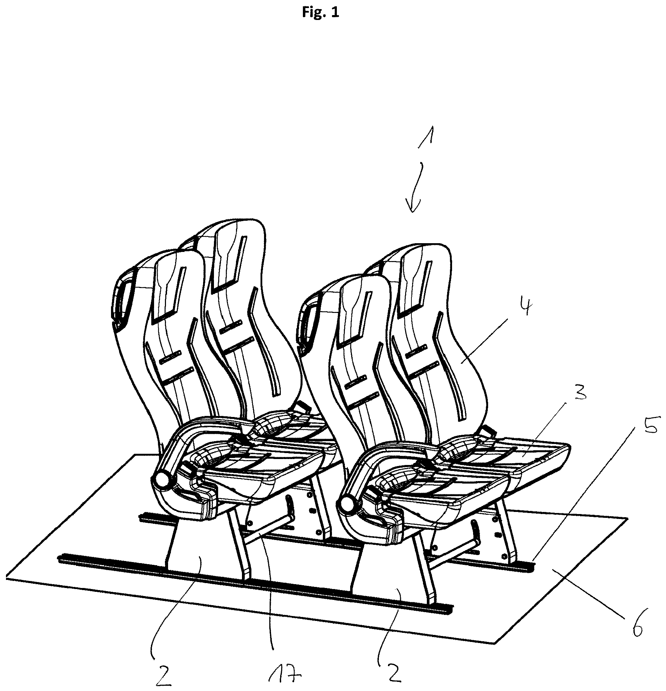

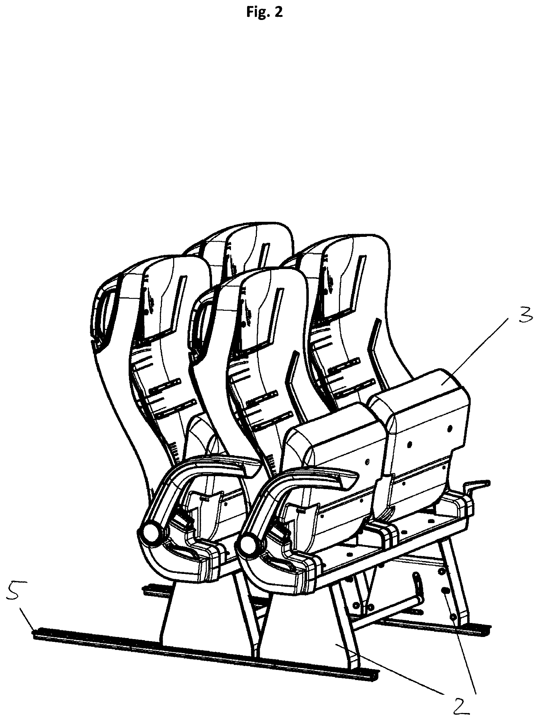

In Figs. 1 and 2 different arrangements of passenger seats 1 according to the invention are shown.

A passenger seat 1 according to the invention comprises a seat leg or seat support structure 2, with which the passenger seat 1, in the present case, a double passenger seat 1 with seating surfaces 3 and backrests 4, is mounted in rails 5 provided in the base ground 6 of a vehicle compartment.

According to the invention, the double seats 1 can be moved along the rails 5 from a first normal position (Fig. 1) to a second position (Fig. 2) for temporarily providing further space if needed, as will be described in the following. Due to the fact that the seating surfaces 3 can be tilt, double seats 1 in a row can be moved very close to each other, as Fig. 2 illustrates.

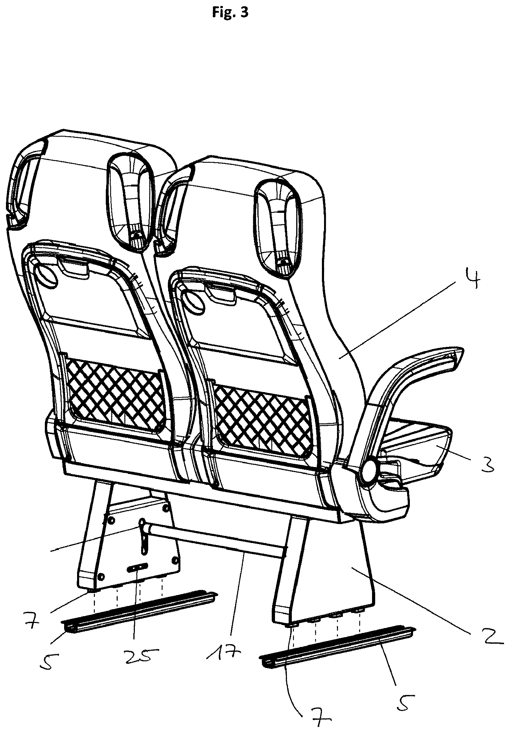

The perspective view of Fig. 3 illustrates that the double passenger seat 1 is guided with its spaced-apart seat support structures 2 in the parallel rails 5 by means of equidistantly spaced sliding blocks 7 which extend underneath the base of the seat support structures 2, respectively.

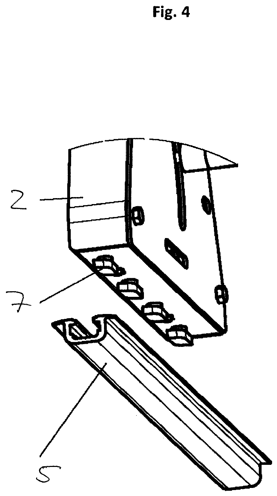

Such sliding blocks 7 and their functioning are shown in more detail in Figs. 4 - 6b.

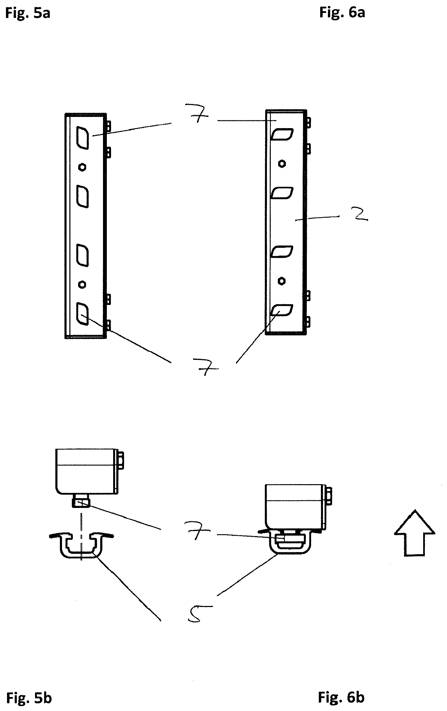

Each seat support structure 2 comprises four sliding blocks 7, which are rotatably supported in the seat support structure 2, as will be explained later. The sliding blocks 7 have a shape of a cam or similar. When the cam is turned in line with the longitudinal extension of the seat support structure 2, as shown in Figs. 4, 5a and 5b, the sliding blocks 7 can be easily and freely inserted into a correspondingly shaped cross-sectional profile of the rails 5. In that state, a passenger seat 1 can be easily removed from the rails 5. When the cam of the sliding blocks 7 is rotated by 90°, after the same have been inserted into the rails 5, as illustrated in Fig. 6a and Fig. 6b, the seat support structure 2 and thus the passenger seat 1 is secured against any vertical movement. However, it can still be longitudinally guided within the rails 5, so that the entire passenger seat 1 (or double seat) can be moved to a desired position, since the sliding blocks 7 of both spaced-apart seat support structures 2 are simultaneously activated, as will be described further down below.

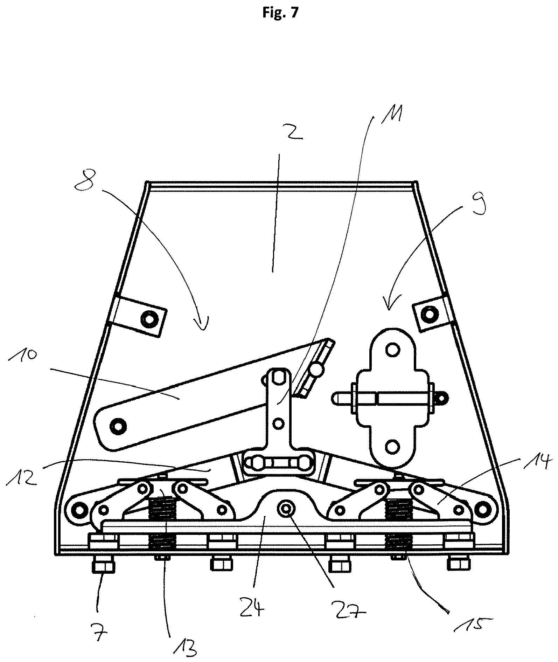

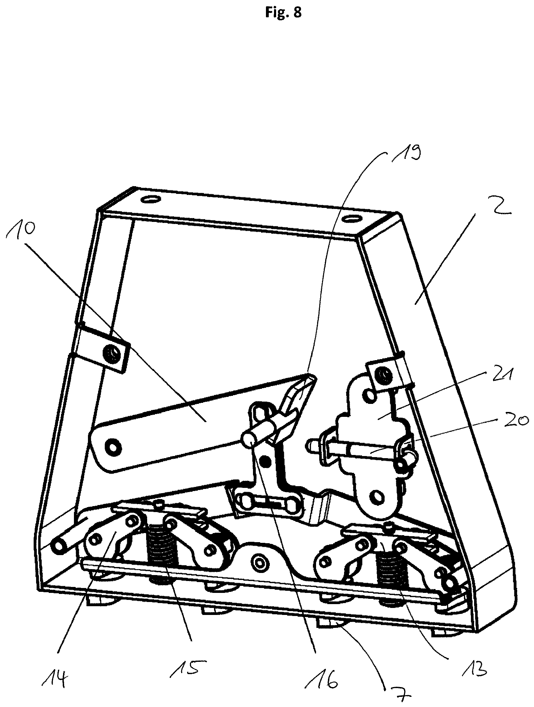

In Figs. 7 and 8 a seat support structure 2 is shown without cover of its housing illustrating an actuation device 8 which according to the invention is configured to cooperate with the sliding blocks 7 so as to simultaneously transfer the sliding blocks 7 between a release position, in which the seat support structure 2 can be freely moved along the rail 5, and a locking position, in which the seat support structure 2 is locked in place due to an engagement of the sliding blocks 7 with the rail 5.

Further, a locking element 9 according to the invention is shown which is configured to lock the actuation device 8 in the locking position.

The actuation device 8 consists of a lever gear mechanism, basically consisting of a first actuation lever 10, which is rotatably fixed in the housing of the seat support structure 2 such that upon downward movement the actuation lever 10 forces via a T-shaped connecting element 11 two lateral levers 12 downwardly. The lateral levers 12 are rotatably supported in the housing of the seat support structure 2 so as to spread apart from each other.

Further, mounting elements 13 are rotatably supported on each lateral lever 12, wherein two connecting levers 14, which themselves spread apart, are rotatably supported against the mounting element 13 and with their other ends cooperate with the sliding blocks 7. The mounting elements 13 each are supported against the base of the seat support structure 2 by a spring element 15.

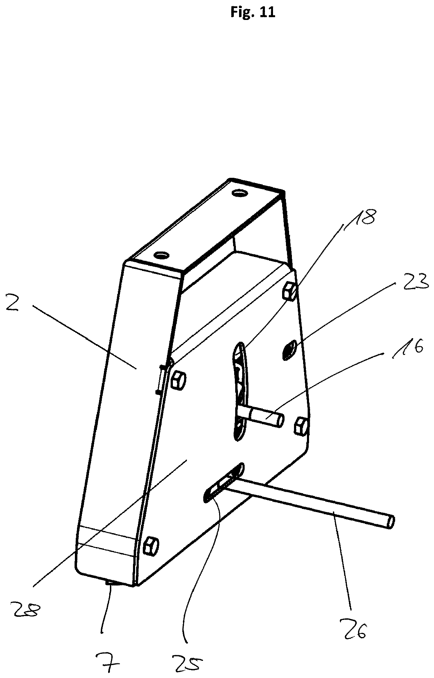

The actuation lever 10 comprises a pin 16, which protrudes to the outside of the housing of the seat support structure 2, as can best be seen in Fig. 11. The pin 16 serves for the mounting of a pedal-like bar 17, as e.g. can be seen in Fig. 3. Correspondingly, the pin 16 is guided in an arc-shaped groove 18 in the cover 28 of the housing of the seat support structure 2.

Further, the actuation lever 10 comprises a kind of abutment plate 19 which is configured and inclined such that it comes into engagement with a locking bolt 20 of the locking element 9, once the actuation lever 10 is in its final downward position, which realizes the locking effect for the sliding blocks 7. The locking bolt 20, which may be under spring-tension, is guided in a mounting plate 21 which is fixed to the housing of the seat support structure 2.

The locking bolt 20 comprises a pin 22 protruding through an opening 23 in the cover 28 of the seat support structure 2 so that is can be accessed by a specifically designed tool, with which an operator can pull the locking bolt 20 to the right out of engagement with the abutment plate 19. Then, due to the spring effect of the spring elements 15 the entire lever gear mechanism may be forced back into the starting position.

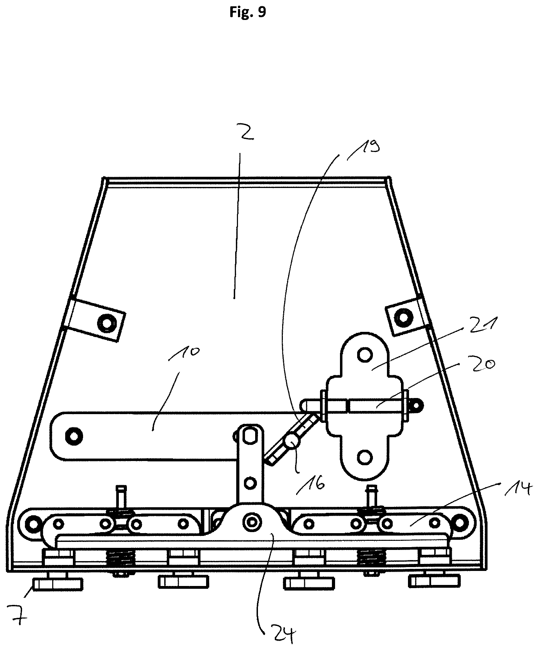

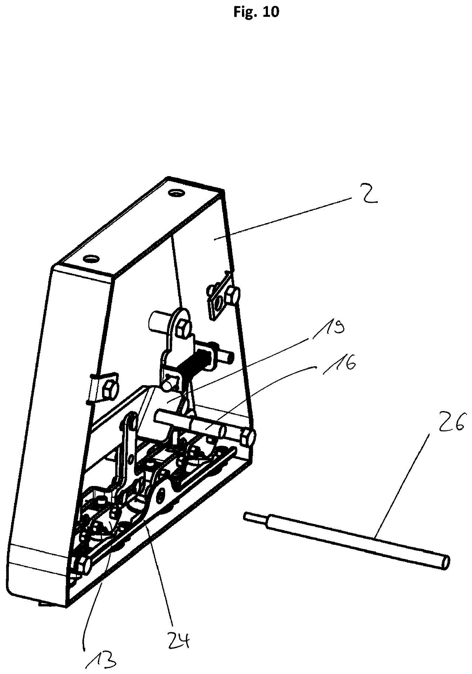

Fig. 9 and Fig. 10 show the locking position, in which due to the specific configuration of the lever gear mechanism as described a downward movement of the actuation lever 10 will vertically lift the sliding blocks 7 and thus bring them into fixed engagement with the profile of the rails 5. As said, such locking position is then maintained simply by the fact that the abutment plate 19 engages with the locking bolt 20.

The actuation device 8 further comprises a brace 24 which cooperate with the sliding blocks 7 and which brace 24 is horizontally slidable within the seat support structure 2. The sliding blocks 7 are connected to the brace 24 such that a horizontal displacement of the brace 24 will set the sliding blocks 7 into rotation. The latter are therefor rotatably supported relative to each connecting lever 14. The brace 24 can be manually shifted between a functional position, in which the sliding blocks 7 are guided in the rail 5 (Figs 6a,b) and a release position, in which the sliding blocks 7 will be rotated by that shifting of the brace 24 by 90° so that they can be removed from the rail 5 (Figs. 5a,b).

The brace 24 can be accessed from the outside through an opening 25 in the cover 28 of the housing of the seat support structure 2 by means of a tool 26 coming into engagement with a recess 27 of the brace 24 to enable the shifting of the brace 24 manually.

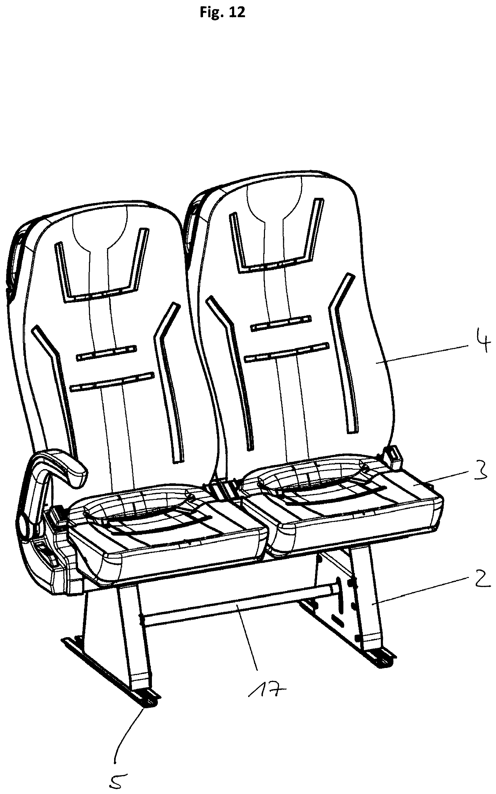

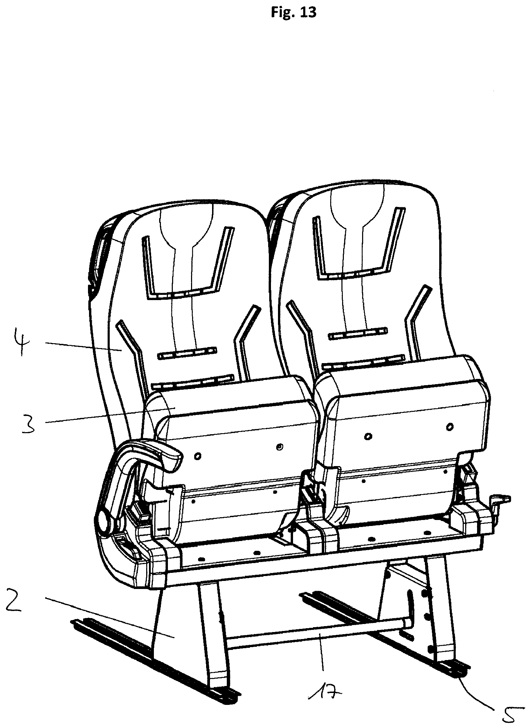

Fig. 12 illustrates an arrangement of the double passenger seat 1 in the release position, in which it can be slideably guided in the rails 5, while Fig. 13 illustrates said arrangement in the locked position, in which the sliding blocks 7 are in locked engagement with the rails 5.

As explained above, the pins 16 of the actuation levers 10 of the actuation devices 8 in each seat support structure 2 are linked by a pedal-like bar 17. This allows synchronous operation of both actuation devices 8 in that an operator simply steps on the bar 17 with sufficient force to bring the actuation device 8 into its locking position and thereby lift the sliding blocks 7 to provide a sufficiently fixed engagement inside the rails 5.

Once manually unlocked via manual operation of the locking element 9 either the bar 17 will be brought back into its upper starting position by means of the spring elements 15 or an operator can lift the bar 17 with sufficient force by foot, supported by the spring effect, to realize the release position in which the double passenger seat 1 again can be slit along the rails 5.

By this application, it is intended to cover all alternatives, modifications and equivalents that may be included within the scope of the invention as defined by the appended claims. It should be understood that the details shown are shown only for the purpose of illustrating a preferred embodiment of the present invention.

## Claims

1. Passenger seat (1) for vehicles having two spaced-apart seat support structures (2) carrying at least one seating surface (3) with a backrest (4), each seat support structure (2) comprising a plurality of sliding blocks (7) with which the seat support structure (2) is guided in a rail (5) provided in an interior ground (6) of the vehicle passenger compartment, each seat support structure (2) comprising an actuation device (8) cooperating with said sliding blocks (7) so as to simultaneously transfer the sliding blocks (7) between a release position, in which the seat support structure (2) can be freely moved along the rail (5), and a locking position, in which the seat support structure (2) is locked in place due to an engagement of the sliding blocks (7) with the rail (5).

2. Passenger seat (1) according to claim 1, in which the sliding blocks (7) are configured to be able to be vertically lifted upon activation of the actuation device (8).

3. Passenger seat (1) according to claim 1 or 2, in which the seat support structure (2) comprises a locking element (9) with which the actuation device (8) comes into engagement once the sliding blocks (7) are in locked engagement with the rail (5) .

4. Passenger seat (1) according to 3, in which the actuation device (8) comprises at least one lever gear (10,11,12,13,14) designed to allow simultaneous activation of the sliding blocks (7).

5. Passenger seat (1) according to claim 4, in which the lever gear (10,11,12,13,14) is supported against at least one spring element (15) being configured to release or support the engagement of the sliding blocks (7) with the rail (5) once the locking element (9) releases the actuation device (8).

6. Passenger seat (1) according to claim 5, in which the locking element (9) is configured to be manually activated.

7. Passenger seat (1) according to claim 5 or 6, in which a brace (24) is provided which is configured to cooperate with the plurality of sliding blocks (7) and which brace (24) is horizontally movably supported in the seat support structure (2) .

8. Passenger seat (1) according to claim 7, in which the sliding blocks (7) are supported with respect to the brace (24) such so as to be rotated between a functional position, in which the sliding blocks (7) are guided in the rail (5), and a release position, in which the sliding blocks (7) can be removed from the rail (5).

9. Passenger seat (1) according to claim 7 or 8, in which the brace (24) is configured to be manually activated.

10. Passenger seat (1) according to any one of claims 1 to 9, in which the actuation device (8) of each seat support structure (2) is connected by a bar (17) extending between the spaced-apart seat support structures (2).

11. Passenger seat (1) according to claim 10, in which the bar (17) is configured as a pedal.

12. Vehicle, in particular for mass transport of people, comprising a passenger seat (1) according to one of claims 1 to 11.
